# EUROPEAN PATENT APPLICATION

(11) **EP 4 553 195 A1**
(43) Date of publication of application: **14.05.2025**
(21) Application number: 23852300.5
(22) Date of filing: 13.07.2023
(51) Int. Cl.: C25B 15/02, C25B 1/04, C25B 9/00, C25B 9/60

(54) **CONTROL DEVICE FOR HYDROGEN PRODUCTION APPARATUS, HYDROGEN PRODUCTION FACILITY, METHOD FOR CONTROLLING HYDROGEN PRODUCTION APPARATUS, AND CONTROL PROGRAM FOR HYDROGEN PRODUCTION APPARATUS**

(30) Priority: 09.08.2022 JP 2022126926
(71) Applicant: Mitsubishi Heavy Industries, Ltd., Tokyo 100-8332 (JP)
(72) Inventor: HARA, Keijo, Tokyo 100-8332 (JP); YOSHIMOTO, Toshizumi, Tokyo 100-8332 (JP); ICHINOSE, Hikaru, Tokyo 100-8332 (JP)
(74) Representative: Studio Torta S.p.A.
(86) International application number: PCT/JP2023/025811
(87) International publication number: WO 2024/034317

(57) **Abstract**

This control device for a hydrogen production apparatus is intended to be used for a hydrogen production apparatus including an electrolyzer for electrolyzing water and a rectifier for supplying a direct-current electric power to the electrolyzer, the control device being provided with: a voltage control unit which is configured so as to adjust an output voltage output from the rectifier to the electrolyzer in such a manner that the output voltage of the rectifier is coincident with a set voltage; and a voltage set unit which is configured so as to set the set voltage to a first voltage that is larger than a rated voltage for the electrolyzer in at least a portion of the period during the start-up of the hydrogen production apparatus.

## Description

### Technical Field

The present disclosure relates to a control device for a hydrogen production apparatus, a hydrogen production facility, a method for controlling a hydrogen production apparatus, and a control program for a hydrogen production apparatus.

The present application claims priority based on JP 2022-126926 filed in the Japan Patent Office on August 9, 2022, and is hereby incorporated by reference.

### Background Art

A water electrolyzer is known as an apparatus for manufacturing hydrogen.

Patent Document 1 discloses a system for manufacturing hydrogen by electrolyzing water in a water electrolyzer having an electrolytic cell including a solid electrolyte membrane.

### Citation List

### Patent Literature

Patent Document 1: JP 2002-129372 A

### Summary of Invention

### Technical Problem

When a hydrogen production apparatus is started up (i.e., when the hydrogen production apparatus is shifted from a stopped state to a hydrogen production/supply operating state), it is necessary to raise the temperature of water (electrolyte solution or the like) in an electrolyzer to a temperature suitable for hydrogen production. A certain amount of time is required to raise the temperature of the water in the electrolyzer, and this temperature raising process is a rate-determining factor of the operation preparation time (i.e., start-up time) of the hydrogen production apparatus. In recent years, there has been an increasing need to cover facility power consumption with surplus power of renewable energy, and it has been required to shorten a plant start-up time in order to efficiently operate with the surplus power.

In view of the above-described circumstances, an object of at least one embodiment of the present invention is to provide a control device for a hydrogen production apparatus, a hydrogen production facility, a method for controlling a hydrogen production apparatus, and a control program for a hydrogen production apparatus, each of which makes it possible to shorten a start-up time of the hydrogen production apparatus.

### Solution to Problem

A control device for a hydrogen production apparatus according to at least one embodiment of the present invention is a control device for a hydrogen production apparatus including an electrolyzer configured to electrolyze water and a rectifier configured to supply DC power to the electrolyzer, the control device including:
a voltage control unit configured to adjust an output voltage output from the rectifier to the electrolyzer in such a manner that the output voltage of the rectifier is coincident with a set voltage; and
a voltage set unit configured to set the set voltage to a first voltage larger than a rated voltage of the electrolyzer in at least a portion of a period during start-up of the hydrogen production apparatus.

A hydrogen production facility according to at least one embodiment of the present invention includes:
a hydrogen production apparatus including an electrolyzer configured to electrolyze water and a rectifier configured to supply DC power to the electrolyzer; and
the above-described control device configured to control the hydrogen production apparatus.

A method for controlling a hydrogen production apparatus according to at least one embodiment of the present invention is a method for controlling a hydrogen production apparatus including an electrolyzer configured to electrolyze water and a rectifier configured to supply DC power to the electrolyzer, the method including:
a step of adjusting an output voltage output from the rectifier to the electrolyzer in such a manner that the output voltage of the rectifier approaches a set voltage; and
a step of setting the set voltage to a first voltage larger than a rated voltage of the electrolyzer in at least a portion of a period during start-up of the hydrogen production apparatus.

A control program for a hydrogen production apparatus according to at least one embodiment of the present invention is a control program for a hydrogen production apparatus including an electrolyzer configured to electrolyze water and a rectifier configured to supply DC power to the electrolyzer, the program causing a computer to execute:
a procedure in which an output voltage output from the rectifier to the electrolyzer is adjusted in such a manner that the output voltage of the rectifier approaches a set voltage; and
a procedure in which the set voltage is set to a first voltage larger than a rated voltage of the electrolyzer in at least a portion of a period during start-up of the hydrogen production apparatus.

### Advantageous Effects of Invention

According to at least one embodiment of the present invention, there are provided a control device for a hydrogen production apparatus, a hydrogen production facility, a method for controlling a hydrogen production apparatus, and a control program for a hydrogen production apparatus, each of which makes it possible to shorten a start-up time of the hydrogen production apparatus.

### Brief Description of Drawings

FIG. 1 is a schematic diagram of a hydrogen production facility to which a control device according to an embodiment is applied.
FIG. 2 is a schematic configuration diagram of a control device according to an embodiment.
FIG. 3 is a flowchart of a method for controlling a hydrogen production apparatus according to an embodiment.
FIG. 4 is a graph depicting an example of changes over time in output voltage, current, power, and temperature of water in an electrolyzer at a start-up time of a hydrogen production apparatus according to an embodiment.
FIG. 5 is a flowchart of a method for controlling a hydrogen production apparatus according to an embodiment.

### Description of Embodiments

Embodiments of the present invention will be described in detail below with reference to the accompanying drawings. However, the dimensions, materials, shapes, relative arrangements, or the like of the components described as embodiments or illustrated in the drawings are not intended to limit the scope of the present invention but are merely illustrative examples.

### Configuration of Hydrogen Production Facility

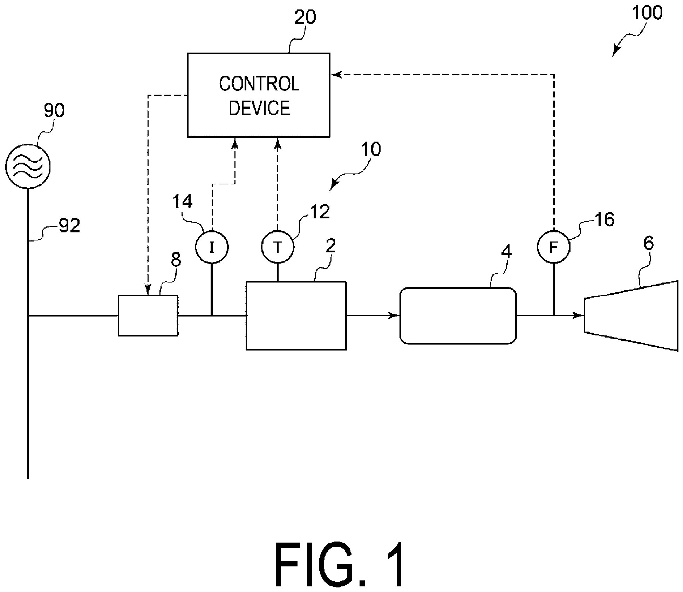

FIG. 1 is a schematic diagram of a hydrogen production facility to which a control device according to an embodiment is applied. As illustrated in FIG. 1, a hydrogen production facility 100 includes a hydrogen production apparatus 10, and a control device 20 configured to control the operation of the hydrogen production apparatus 10. The hydrogen production facility 100 may include a reservoir 4 configured to store the hydrogen produced in the hydrogen production apparatus 10.

The hydrogen production apparatus 10 is a water electrolyzer configured to produce hydrogen by electrolyzing water, and includes an electrolyzer 2 configured to electrolyze water and a rectifier 8 configured to supply DC power to the electrolyzer 2. The type of water electrolyzer is not limited. The water electrolyzer may be, for example, an alkaline water electrolyzer, a polymer electrolyte membrane (PEM) water electrolyzer, an anion exchange membrane (AEM) water electrolyzer, or a solid oxide electrolysis cell (SOEC) water electrolyzer.

The rectifier 8 is configured to supply DC power to the electrolyzer 2. The rectifier 8 is supplied with power (typically, AC power) from a power source 90 via a power-transmission line 92. The power source 90 may be a power supply system, or another power source (e.g., a power generation device or a power accumulation device such as a battery). The rectifier 8 converts the power from the power source 90, from AC power to DC power as necessary, and outputs it as a DC voltage to the electrolyzer 2. Hereinafter, the DC voltage output from the rectifier 8 to the electrolyzer 2 (a voltage applied to the electrolyzer 2) is also referred to as an output voltage.

Water is supplied to the electrolyzer 2. As described above, DC power is supplied to the electrolyzer 2 via the rectifier 8. Water in the electrolyzer 2 is electrolyzed by applying a DC voltage, via the rectifier 8, between a pair of electrodes provided in the electrolyzer 2, whereby hydrogen is generated at the cathode side while oxygen is generated at the anode side. Water (electrolyte solution) in which an electrolyte is dissolved may be supplied into the electrolyzer 2 and the water (water constituting the electrolyte solution) may be electrolyzed. The electrolyte may be an alkaline substance such as potassium hydroxide (KOH).

The hydrogen gas generated at the cathode side of the electrolyzer 2 is guided to a gas-liquid separator and/or a dehumidifier to remove moisture, and then is guided to the reservoir 4. The oxygen gas generated at the anode side of the electrolyzer 2 may be guided to a gas-liquid separator and/or a dehumidifier to remove moisture, and then may be supplied to an oxygen consumption facility or may be discharged to the outside.

The reservoir 4 is configured to store gaseous hydrogen. The hydrogen stored in the reservoir 4 may be supplied to a hydrogen consumption facility 6. The reservoir 4 may have characteristics suitable for supplying hydrogen to the hydrogen consumption facility 6. The reservoir 4 may include, for example, an accumulate header (header tank).

The hydrogen consumption facility 6 may include, for example, hydrogen combustion facilities configured to burn hydrogen (e.g., gas turbine facilities or iron manufacturing facilities), hydrogen liquefaction facilities configured to liquefy hydrogen, facilities to generate electricity by chemical reaction using hydrogen as fuel (e.g., power generation facilities including fuel cells such as Solid Oxide Fuel Cell (SOFC)), facilities to manufacture fuel using hydrogen as feedstock (e.g., fuel synthesis facilities or the like), or hydrogen gas stations configured to supply hydrogen to the equipment.

The hydrogen production facility 100 may include a temperature sensor 12 for measuring the temperature of water (electrolyte solution or the like) in the electrolyzer 2. The temperature sensor 12 may be configured to measure the temperature of water in the electrolyzer 2, may be configured to measure the temperature of water in a line for guiding the hydrogen gas or oxygen gas from the electrolyzer 2 to the gas-liquid separator, or may be configured to measure the temperature of water in a line for returning water separated from the hydrogen gas or oxygen gas in the gas-liquid separator to the electrolyzer 2.

The hydrogen production facility 100 may include a current sensor 14 for measuring a DC current flowing through a circuit including the electrolyzer 2 when water is electrolyzed in the electrolyzer 2. The above circuit includes electric wires respectively connecting a pair of output terminals of the DC voltage of the rectifier 8 and a pair of electrodes of the electrolyzer 2. The current sensor 14 may be configured to measure a current flowing between any of the pair of output terminals of the rectifier 8 and any of the pair of electrodes of the electrolyzer 2.

The hydrogen production facility 100 may include a flow rate sensor 16 for measuring a consumption flow rate of hydrogen in the hydrogen consumption facility 6. The flow rate sensor 16 may be provided at a line for guiding hydrogen from the reservoir 4 to the hydrogen consumption facility 6, as illustrated in FIG. 1.

The temperature sensor 12, the current sensor 14, and/or the flow rate sensor 16 may be electrically connected to the control device 20, and signals indicating measurement results by the temperature sensor 12, the current sensor 14, and/or the flow rate sensor 16 may be sent to the control device 20.

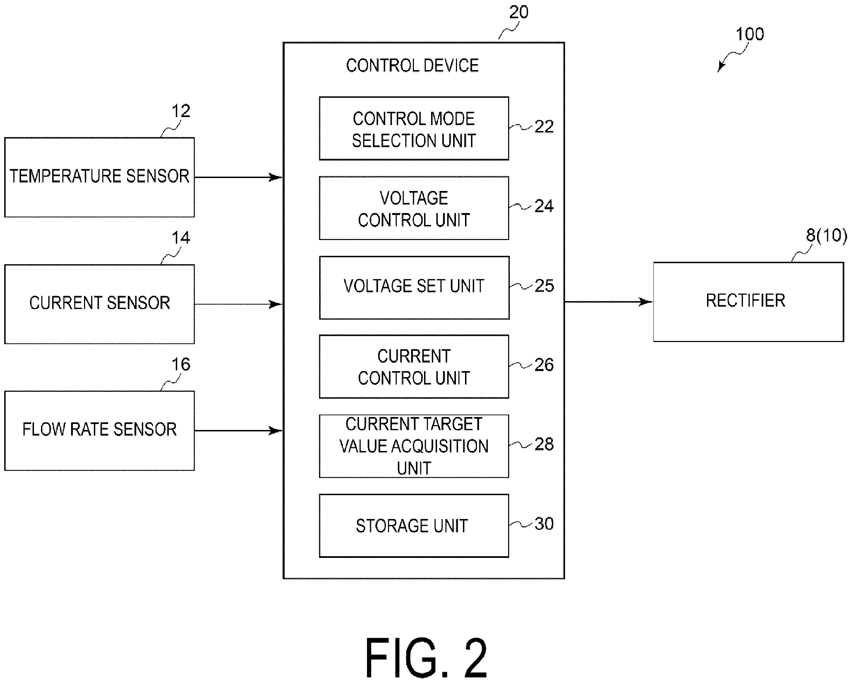

FIG. 2 is a schematic configuration diagram of the control device according to an embodiment. The control device 20 is configured to control the operation of the hydrogen production apparatus 10 based on the measurement results or the like by the temperature sensor 12, the current sensor 14, and/or the flow rate sensor 16.

As illustrated in FIG. 2, the control device 20 includes a voltage control unit 24 and a voltage set unit 25. The control device 20 may include a control mode selection unit 22, a current control unit 26, a current target value acquisition unit 28, and a storage unit 30.

The control mode selection unit 22 is configured to select a control mode of the rectifier 8 from a voltage control mode in which the voltage control unit 24 controls the rectifier 8 and a current control mode in which the current control unit 26 controls the rectifier 8.

The voltage control unit 24 is configured to adjust the output voltage of the rectifier 8 so that the output voltage output from the rectifier 8 to the electrolyzer 2 coincides with a set voltage. The set voltage may be set by the voltage set unit 25 described below or may be manually set by an operator.

The voltage set unit 25 is configured to set the set voltage to a first voltage V_{A} larger than a rated voltage of the electrolyzer 2 in at least a portion of a period during start-up of the hydrogen production apparatus 10. The first voltage V_{A} may be stored in advance in the storage unit 30 described later.

The term "during start-up of the hydrogen production apparatus 10" refers to a preparation period from when the hydrogen production apparatus 10 is in a stopped state to when the hydrogen production apparatus 10 is shifted to a hydrogen production/supply operation state. During the start-up of the hydrogen production apparatus 10, a DC voltage is applied from the rectifier 8 to the electrolyzer 2 to start the electrolysis of the water in the electrolyzer 2, thereby causing a current to flow through the circuit including the electrolyzer 2 to raise the temperature of the water in the electrolyzer 2. The completion of the start-up of the hydrogen production apparatus 10 can be determined, for example, by the fact that the temperature of the water in the electrolyzer 2 has risen to reach a specified temperature.

The rated voltage of the electrolyzer 2 is a voltage applied to the electrolyzer 2 during a rated load operation (operation at 100% load (hydrogen production amount is at 100%)) of the electrolyzer 2. The rated voltage of the electrolyzer 2 is determined as a specification in accordance with the type of the electrolyzer 2.

The current control unit 26 is configured to adjust an output current of the rectifier 8 based on the current flowing through the circuit including the electrolyzer 2.

The current target value acquisition unit 28 is configured to acquire a current target value indicating a current of a circuit corresponding to a target production amount of hydrogen in the electrolyzer 2 (i.e., in the hydrogen production apparatus 10) mainly after the start-up of the hydrogen production apparatus 10 is completed.

For example, the current target value acquisition unit 28 may acquire a consumption flow rate of hydrogen in the hydrogen consumption facility 6 supplied with hydrogen from the reservoir 4, and calculate the current target value based on the consumption flow rate. A flow rate of hydrogen supplied to the hydrogen consumption facility 6 from the reservoir 4 may be acquired as the consumption flow rate of hydrogen in the hydrogen consumption facility 6. In this case, the hydrogen flow rate measured by the flow rate sensor 16 (see FIG. 1) may be acquired as the consumption flow rate. Alternatively, as the consumption flow rate of hydrogen in the hydrogen consumption facility 6, the consumption flow rate of hydrogen may be calculated based on a fuel command value which is a command value of the fuel flow rate supplied to the hydrogen consumption facility 6. In this case, the current target value acquisition unit 28 may be configured to convert the fuel command value into the flow rate of hydrogen by using a function indicating a correlation between the fuel command value and the flow rate of hydrogen.

The storage unit 30 is configured to store numerical values having been set in advance, and the like. The numerical values stored in advance in the storage unit 30 may include the first voltage V_{A}, a limiting value of power in the circuit including the electrolyzer 2, and/or a temperature (specified temperature) of the water in the electrolyzer 2 for determining the completion of the start-up of the hydrogen production apparatus 10.

The control device 20 includes a computer including a processor (CPU or the like), a main storage device (a memory device; RAM or the like), an auxiliary storage device, an interface, and the like. The control device 20 is configured to receive signals from the temperature sensor 12, the current sensor 14, and/or the flow rate sensor 16 via the interface. The processor is configured to process the signals received in this manner. The processor is configured to process programs loaded in the main storage device. Thus, the functions of the control mode selection unit 22, the voltage control unit 24, the voltage set unit 25, the current control unit 26, and the current target value acquisition unit 28 are enabled. Note that the storage unit 30 described above may include the main storage device or the auxiliary storage device of the computer constituting the control device 20.

The processing contents of the control device 20 are implemented as programs to be executed by the processor. The programs may be stored in, for example, the auxiliary storage device. When the programs are executed, the programs are loaded in the main storage device. The processor is configured to read the programs from the main storage device and execute instructions included in the programs.

### Control Flow for Hydrogen Production Apparatus

Next, a method for controlling a hydrogen production apparatus according to some embodiments will be described. In the following description, a case in which the hydrogen production apparatus 10 is controlled using the control device 20 will be described. However, in some embodiments, a method for controlling the hydrogen production apparatus may be executed using another device, or part or all of a procedure described below may be manually performed.

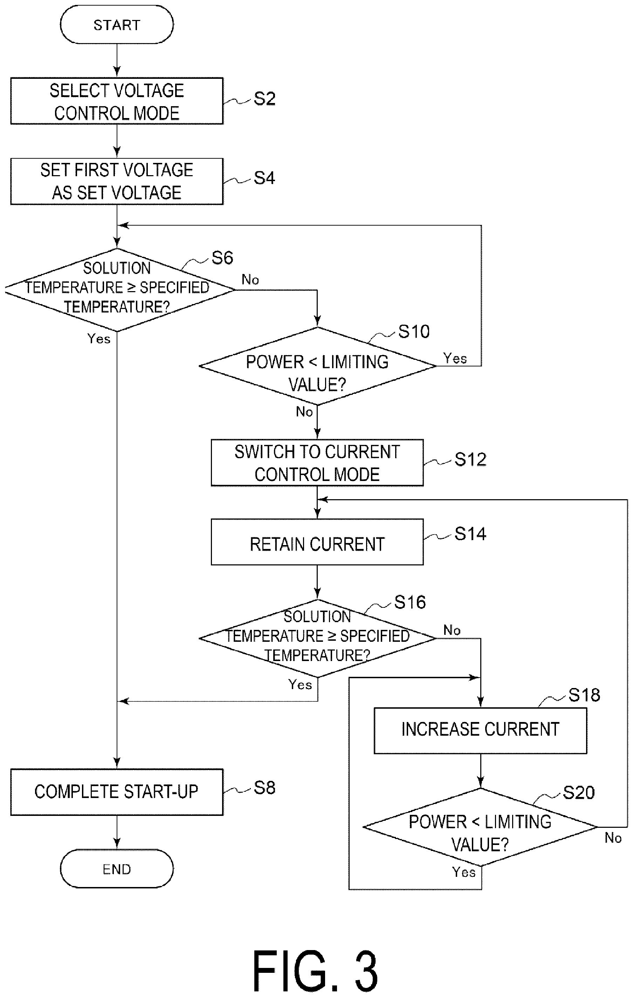

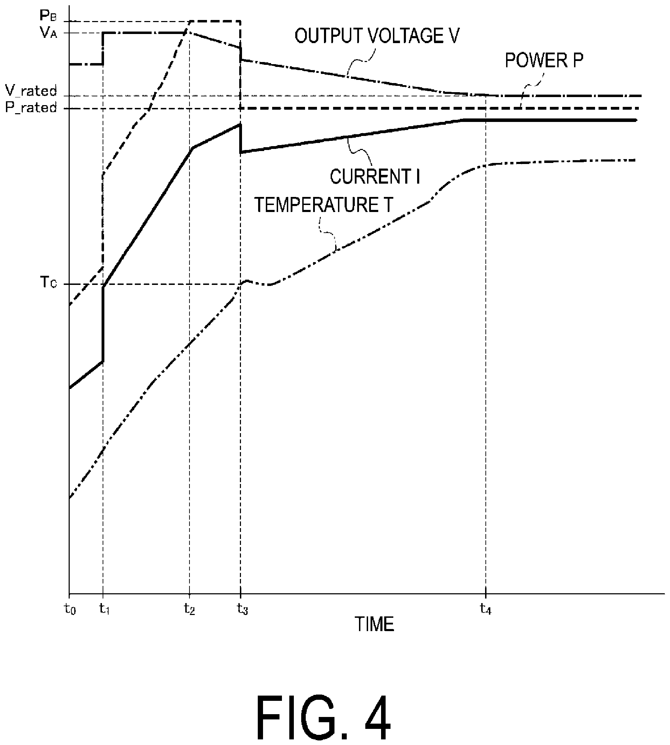

FIG. 3 is a flowchart of a method for controlling the hydrogen production apparatus according to an embodiment when the hydrogen production apparatus 10 is started up. FIG. 4 is a graph depicting an example of changes over time in an output voltage V of the rectifier 8, a current I flowing through a circuit including the electrolyzer 2, power P in the circuit, and a temperature T of water (electrolyte solution or the like) in the electrolyzer 2, at the start-up time of the hydrogen production apparatus 10 according to an embodiment. The power P is a product of the output voltage V and the current I (P = V × I).

In an embodiment, the voltage control mode is selected as the control mode of the rectifier 8 by the control device 20 (S2 in FIG. 3) after a time at which the start-up of the hydrogen production apparatus 10 is started (t0 in FIG. 4), and the set voltage of the rectifier 8 is set to the first voltage V_{A} larger than a rated voltage V_rated of the electrolyzer 2 (S4 in FIG. 3) at time t1 (FIG. 4). As a result, the output voltage V of the rectifier 8 is adjusted in such a manner as to be coincident with the first voltage V_{A} after time t1.

The above-mentioned first voltage V_{A} may be a maximum operating voltage of the electrolyzer 2.

As described above, the output voltage V output from the rectifier 8 to the electrolyzer 2 (i.e., the voltage applied to the electrolyzer 2) is set to the first voltage V_{A} larger than the rated voltage V_rated of the electrolyzer 2 in at least a portion of the period (the period after time t1) during the start-up of the hydrogen production apparatus 10. Because of this, the current flowing through the circuit including the electrolyzer 2 becomes larger due to the electrolysis of the water in the electrolyzer 2 than the current flowing therethrough when the output voltage V is set to a voltage equal to or lower than the rated voltage V_rated of the electrolyzer 2. As a result, the Joule heat generated in the water in the electrolyzer 2 increases, and the rate of a temperature rise of the water in the electrolyzer 2 becomes large. As the temperature of the water in the electrolyzer 2 rises, the current easily flows through the water in the electrolyzer 2 (i.e., electrical resistance of the water decreases). Therefore, as the temperature of the water in the electrolyzer 2 rises, the current flowing through the circuit including the electrolyzer 2 increases, and the temperature of the water in the electrolyzer 2 further easily rises. In this manner, the time required for raising the temperature of the water in the electrolyzer 2 can be shortened. This makes it possible to shorten the start-up time of the hydrogen production apparatus 10.

After the set voltage of the rectifier 8 is set to the first voltage V_{A} in step S4 as described above, it is determined whether or not the temperature T of the water in the electrolyzer 2 has reached a specified temperature T_{C} (S6 in FIG. 3), and in a case where the temperature T has not reached the specified temperature T_{C} yet (No in S6), it is checked whether or not the power P is smaller than a limiting value P_{B} (S10 in FIG. 3). The limiting value P_{B} may be a value determined by the specifications of the electrolyzer 2.

In a case where, before the power P reaches the limiting value P_{B} (Yes in S10), the temperature T of the water in the electrolyzer 2 has reached the specified temperature T_{C} (Yes in S6 in FIG. 3), the control device 20 determines that the start-up of the hydrogen production apparatus 10 is completed (S8 in FIG. 3), and the hydrogen production apparatus 10 starts the supply of hydrogen.

On the other hand, in a case where the power P has reached the limiting value P_{B} in a state in which the temperature T of the water in the electrolyzer 2 has not reached the specified temperature T_{C} yet (No in S6 and also No in S10 in FIG. 3, time t2 in FIG. 4), the control mode of the rectifier 8 by the control device 20 is switched to the current control mode (S12 in FIG. 3), and until the temperature T of the water in the electrolyzer 2 reaches the specified temperature T_{C}, the output voltage V of the rectifier 8 is adjusted to increase the current I within a range in which the power P does not exceed the limiting value P_{B} (S14 to S18 in FIG. 3, time t2 to time t3 in FIG. 4).

In an exemplary embodiment illustrated in FIG. 3, after the control mode of the rectifier 8 is switched to the current control mode in step S12, the current I is retained (S14). Then, it is determined whether or not the temperature T of the water in the electrolyzer 2 has reached the specified temperature T_{C} (S16).

When the temperature T of the water in the electrolyzer 2 has reached the specified temperature T_{C} (Yes in S16), the control device 20 determines that the start-up of the hydrogen production apparatus 10 is completed (S8 in FIG. 3), and the hydrogen production apparatus 10 starts the supply of hydrogen.

On the other hand, when the temperature T of the water in the electrolyzer 2 has not reached the specified temperature T_{C} yet (No in S16), the process proceeds to step S18. At this time, since the temperature of the water in the electrolyzer 2 tends to rise, electrical resistance of the water in the electrolyzer 2 decreases, and the voltage V drops accordingly and the power P also drops. Then, the current is increased within a range in which the power P does not exceed the limiting value P_{B} (S18, Yes in S20). When the power P exceeds the limiting value P_{B} (No in S20), the process returns to step S14 and the current I is retained. As discussed above, by repeatedly performing steps S14 to S18 until the temperature T of the water in the electrolyzer 2 reaches the specified temperature T_{C}, the temperature T of the water in the electrolyzer 2 can be made to reach the specified temperature T_{C} while increasing the current I within a range in which the power P does not exceed the limiting value P_{B}. Note that, in the example depicted in FIG. 4, steps S14 to S18 are repeatedly performed from time t2 at which the power P reaches the limiting value P_{B} to time t3 at which the temperature T of the water in the electrolyzer 2 reaches the specified temperature T_{C}.

Alternatively, in an embodiment, when the control mode of the rectifier 8 is switched to the current control mode in step S12 described above, the output voltage V is adjusted so that the power P is maintained at the limiting value P_{B} until the temperature T of the water in the electrolyzer 2 reaches the specified temperature T_{C}. At the time point when the control mode of the rectifier 8 is switched to the current control mode (time t2 in FIG. 4), the temperature of the water in the electrolyzer 2 tends to rise, and therefore the current I also tends to increase. Accordingly, by adjusting the output voltage V so that the power P is maintained at the limiting value P_{B} from this time point (time t2), the current I can be increased within a range in which the power P does not exceed the limiting value P_{B}.

As described above, in some embodiments, during the start-up of the hydrogen production apparatus 10, by making the output voltage V of the rectifier 8 larger than the rated voltage V_rated of the electrolyzer 2, the current I flowing through the circuit including the electrolyzer 2 increases, and when the power P in the circuit has reached the limiting value P_{B}, the control of the rectifier 8 is switched to the current control mode to increase the current I within a range in which the power P in the circuit does not exceed the limiting value P_{B}. As a result, the temperature rise of the water in the electrolyzer 2 can be promoted and the start-up time of the hydrogen production apparatus 10 can be shortened while protecting the electrolyzer 2 by preventing overpower or overcurrent in the circuit.

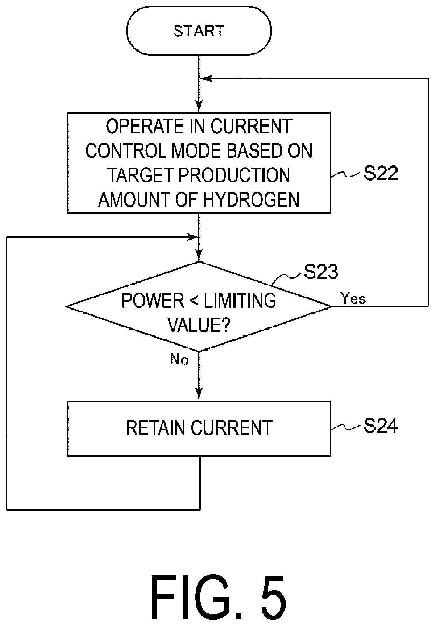

FIG. 5 is a flowchart of a method for controlling the hydrogen production apparatus according to one embodiment after the start-up of the hydrogen production apparatus 10 is completed.

As described above, when the temperature T of the water in the electrolyzer 2 has risen to the specified temperature T_{C} (Yes in S6 or S16 discussed above, time t3 in FIG. 4), the control device 20 determines that the start-up of the hydrogen production apparatus 10 is completed (S8 discussed above). In an embodiment, when the start-up of the hydrogen production apparatus 10 is completed (time t3 in FIG. 4), the current control mode is selected as the control mode of the rectifier 8 by the control device 20, and the output voltage V of the rectifier 8 is adjusted so that the current I flowing through the circuit including the electrolyzer 2 approaches the current target value (S22 in FIG. 5). The current target value is a target value of a current corresponding to a target production amount of hydrogen in the hydrogen production apparatus 10, and is acquired by, for example, the above-described current target value acquisition unit 28. This makes it possible for the hydrogen production apparatus 10 to produce and supply the target production amount of hydrogen.

In step S22, the output voltage V of the rectifier 8 may be adjusted by feedback control based on a deviation between the above-described current target value and an actual measurement value of the current I (measurement value by the current sensor 14).

As described above, in the example depicted in FIG. 4, after time t3, the rectifier 8 is controlled based on the current target value. At time t4, the operation is performed at the rated load (production amount of hydrogen at 100%); after time t4, the output voltage V, the current I, and the temperature T of the water in the electrolyzer 2 are substantially constant. In FIG. 4, the voltage applied to the electrolyzer 2 (i.e., the output voltage of the rectifier 8) is the rated voltage V_rated during the rated load operation, and the power P during the rated load operation is P_rated.

In some embodiments, during the operation after the start-up of the hydrogen production apparatus 10 is completed (i.e., during the operation in step S22), the output voltage V of the rectifier 8 may be adjusted so that the current I approaches the current target value within a range in which the power P in the circuit including the electrolyzer 2 does not exceed the limiting value P_{B} (S23 to S24 in FIG. 5).

In the embodiment illustrated in FIG. 5, when the hydrogen production apparatus 10 is operated under the control based on the current target value (step S22 described above), it is checked whether or not the power P is smaller than the limiting value P_{B} (S23). When the power P has not reached the limiting value P_{B} yet (Yes in step S23), the control performed in step S22 is continued. On the other hand, when the power P has reached the limiting value P_{B} (No in step S23), the current I is retained until the power P becomes smaller than the limiting value P_{B} (S24). With this, a situation in which the power P exceeds the limiting value P_{B} is suppressed.

As described above, during the operation after the start-up of the hydrogen production apparatus 10 is completed, by controlling the current I flowing through the circuit including the electrolyzer 2 within a range in which the power P in the above circuit does not exceed the limiting value P_{B}, the target production amount of hydrogen can be produced and supplied while protecting the electrolyzer 2 by preventing overpower or overcurrent in the above circuit.

The content described in each of the above embodiments is understood as follows, for example.

(1) The control device (20) for the hydrogen production apparatus (10) according to at least one embodiment of the present invention is a control device for a hydrogen production apparatus including the electrolyzer (2) configured to electrolyze water and the rectifier (8) configured to supply DC power to the electrolyzer, the control device including:
   the voltage control unit (24) configured to adjust the output voltage (V) output from the rectifier to the electrolyzer in such a manner that the output voltage of the rectifier is coincident with a set voltage; and
   the voltage set unit (25) configured to set the set voltage to the first voltage (V_{A}) larger than a rated voltage of the electrolyzer in at least a portion of a period during start-up of the hydrogen production apparatus.

In the configuration of (1) described above, the output voltage output from the rectifier to the electrolyzer (i.e., the voltage applied to the electrolyzer) is set to the first voltage larger than the rated voltage of the electrolyzer in at least a portion of the period during the start-up of the hydrogen production apparatus. This makes it possible to increase a current flowing through a circuit including the electrolyzer by electrolysis of water in the electrolyzer and increase the rate of a temperature rise of the water in the electrolyzer. Thus, according to the configuration of (1) described above, it is possible to shorten the time required for raising the temperature of the water in the electrolyzer during the start-up of the hydrogen production apparatus, thereby making it possible to shorten the start-up time of the hydrogen production apparatus.

(2) In some embodiments, in the configuration of (1) described above, the first voltage is a maximum operating voltage of the electrolyzer.

In the configuration of (2) described above, the output voltage of the rectifier is set to the maximum operating voltage of the electrolyzer in at least a portion of the period during the start-up of the hydrogen production apparatus. This makes it possible to more increase the current flowing through the circuit including the electrolyzer by the electrolysis of the water in the electrolyzer and more increase the rate of the temperature rise of the water in the electrolyzer. Thus, according to the configuration of (2) described above, it is possible to more shorten the time required for raising the temperature of the water in the electrolyzer during the start-up of the hydrogen production apparatus, thereby making it possible to more shorten the start-up time of the hydrogen production apparatus.

(3) In some embodiments, in the configuration of (1) or (2) described above, there are included:
the current control unit (26) configured to adjust the output voltage of the rectifier based on the current (I) flowing through the circuit including the electrolyzer; and
the control mode selection unit (22) configured to select the control mode of the rectifier from the voltage control mode in which the rectifier is controlled by the voltage control unit and the current control mode in which the rectifier is controlled by the current control unit, wherein
the control mode selection unit is configured to switch the control of the rectifier from the voltage control mode to the current control mode when the power (P) in the circuit has reached the limiting value (P_{B}) while the rectifier being controlled in the voltage control mode during the start-up of the hydrogen production apparatus, and
the current control unit is configured to adjust the output voltage of the rectifier in such a manner that the current increases within a range in which the power does not exceed the limiting value during the start-up of the hydrogen production apparatus.

According to the configuration of (3) described above, during the start-up of the hydrogen production apparatus, by making the output voltage of the rectifier larger than the rated voltage of the electrolyzer as in (1) described above, the current flowing through the circuit including the electrolyzer increases, and when the power in the circuit has reached the limiting value, the control of the rectifier is switched to the current control mode to increase the current within a range in which the power in the circuit does not exceed the limiting value. As a result, the temperature rise of the water in the electrolyzer can be promoted and the start-up time of the hydrogen production apparatus can be shortened while protecting the electrolyzer by preventing overpower or overcurrent in the circuit.

(4) In some embodiments, in the configuration of any one of (1) to (3) described above, there are included:
the current control unit (26) configured to adjust the output voltage of the rectifier based on the current flowing through the circuit including the electrolyzer;
the control mode selection unit (22) configured to select the control mode of the rectifier from the voltage control mode in which the rectifier is controlled by the voltage control unit and the current control mode in which the rectifier is controlled by the current control unit; and
the current target value acquisition unit (28) configured to acquire a current target value indicating a current in the circuit corresponding to a target production amount of hydrogen in the electrolyzer, wherein
the control mode selection unit selects the current control mode as the control mode of the rectifier when the start-up of the hydrogen production apparatus is completed, and
the current control unit is configured to adjust the output voltage of the rectifier in such a manner that the current flowing through the above circuit approaches the current target value after the start-up of the hydrogen production apparatus is completed.

According to the configuration of (4) described above, after the completion of the start-up of the hydrogen production apparatus, the control mode of the rectifier is set to the current control mode, and the output voltage of the rectifier is adjusted in such a manner that the current in the circuit including the electrolyzer approaches the current target value corresponding to the target production amount of hydrogen. This makes it possible to produce and supply the target production amount of hydrogen in a short period of time from when the start-up of the hydrogen production apparatus is started.

(5) In some embodiments, in the configuration of (4) described above,
the control mode selection unit is configured to determine that the start-up of the hydrogen production apparatus is completed when the temperature of the water in the electrolyzer has reached the specified temperature (T_{C}) during the start-up of the hydrogen production apparatus.

According to the configuration of (5) described above, it is possible to appropriately determine that the start-up of the hydrogen production apparatus is completed based on the fact that the temperature of the water in the electrolyzer has reached the specified temperature, and to promptly start the production and supply of the target production amount of hydrogen.

(6) In some embodiments, in the configuration of (4) or (5) described above,
the current control unit is configured to adjust the output voltage of the rectifier in such a manner that the current approaches the current target value within a range in which the power in the circuit does not exceed the limiting value after the start-up of the hydrogen production apparatus is completed.

According to the configuration of (6) described above, during the operation after the start-up of the hydrogen production apparatus is completed, the current flowing through the circuit including the electrolyzer is controlled within a range in which the power in the above circuit does not exceed the limiting value, and therefore the target production amount of hydrogen can be produced and supplied while protecting the electrolyzer by preventing overpower or overcurrent in the circuit.

(7) The hydrogen production facility (100) according to at least one embodiment of the present invention includes:
the hydrogen production apparatus (10) including the electrolyzer (2) configured to electrolyze water, and the rectifier (8) configured to supply DC power to the electrolyzer; and
the control device (20) according to any one of (1) to (6) described above configured to control the hydrogen production apparatus.

In the configuration of (7) described above, the output voltage output from the rectifier to the electrolyzer (i.e., the voltage applied to the electrolyzer) is set to the first voltage larger than the rated voltage of the electrolyzer in at least a portion of the period during the start-up of the hydrogen production apparatus. This makes it possible to increase the current flowing through the circuit including the electrolyzer by the electrolysis of the water in the electrolyzer and increase the rate of the temperature rise of the water in the electrolyzer. Thus, according to the configuration of (7) described above, it is possible to shorten the time required for raising the temperature of the water in the electrolyzer during the start-up of the hydrogen production apparatus, thereby making it possible to shorten the start-up time of the hydrogen production apparatus.

(8) A method for controlling a hydrogen production apparatus according to at least one embodiment of the present invention is a method for controlling the hydrogen production apparatus (10) including the electrolyzer (2) configured to electrolyze water and the rectifier (8) configured to supply DC power to the electrolyzer, the method including:
a step (S2, S4) of adjusting an output voltage output from the rectifier to the electrolyzer in such a manner that the output voltage of the rectifier approaches a set voltage; and
a step (S4) of setting the set voltage to a first voltage larger than a rated voltage of the electrolyzer in at least a portion of a period during start-up of the hydrogen production apparatus.

In the method of (8) described above, the output voltage output from the rectifier to the electrolyzer (i.e., the voltage applied to the electrolyzer) is set to the first voltage larger than the rated voltage of the electrolyzer in at least a portion of the period during the start-up of the hydrogen production apparatus. This makes it possible to increase a current flowing through a circuit including the electrolyzer by electrolysis of the water in the electrolyzer and increase the rate of the temperature rise of the water in the electrolyzer. Thus, according to the method of (8) described above, it is possible to shorten the time required for raising the temperature of the water in the electrolyzer during the start-up of the hydrogen production apparatus, thereby making it possible to shorten the start-up time of the hydrogen production apparatus.

(9) A control program for a hydrogen production apparatus according to at least one embodiment of the present invention is a control program for the hydrogen production apparatus (10) including the electrolyzer (2) configured to electrolyze water and the rectifier (8) configured to supply DC power to the electrolyzer, the control program causing a computer to execute:
a procedure in which an output voltage output from the rectifier to the electrolyzer is adjusted in such a manner that the output voltage of the rectifier approaches a set voltage; and
a procedure in which the set voltage is set to a first voltage larger than a rated voltage of the electrolyzer in at least a portion of a period during start-up of the hydrogen production apparatus.

According to the program of (9) described above, the output voltage output from the rectifier to the electrolyzer (i.e., the voltage applied to the electrolyzer) is set to the first voltage larger than the rated voltage of the electrolyzer in at least a portion of the period during the start-up of the hydrogen production apparatus. This makes it possible to increase a current flowing through a circuit including the electrolyzer by electrolysis of the water in the electrolyzer and increase the rate of the temperature rise of the water in the electrolyzer. Thus, according to the program of (9) described above, it is possible to shorten the time required for raising the temperature of the water in the electrolyzer during the start-up of the hydrogen production apparatus, thereby making it possible to shorten the start-up time of the hydrogen production apparatus.

The embodiments of the present invention have been described above. However, the present invention is not limited to the above-described embodiments, and includes forms obtained by modifying the above-described embodiments and forms obtained by appropriately combining these forms.

In the present specification, an expression of a relative or absolute arrangement, such as "in a direction", "along a direction", "parallel", "orthogonal", "centered", "concentric", or "coaxial" shall not be construed as indicating the arrangement only in a strict literal sense, but also construed as expressing a state where the arrangement is relatively displaced by a tolerance, or by an angle or a distance to the extent that the same function can be achieved.

For example, an expression of a state where features are equal, such as "same", "equal", and "uniform" shall not be construed as indicating only a state where the features are equal in a strict literal sense, but also construed as expressing a state where there is a tolerance or a difference to the extent that the same function can be achieved.

In the present specification, an expression indicating a shape such as a rectangular shape or a cylindrical shape shall not be construed as indicating only a shape such as a rectangular shape or a cylindrical shape in a strict geometrical sense, but also construed as indicating a shape including a depression, a protrusion, a chamfered portion, or the like to the extent that the same effect can be achieved.

In the present specification, expressions such as "comprising", "including", or "having" one component are not intended as exclusive expressions that exclude the presence of other components.

### Reference Signs List

2 Electrolyzer
4 Reservoir
6 Hydrogen consumption facility
8 Rectifier
10 Hydrogen production apparatus
12 Temperature sensor
14 Current sensor
16 Flow rate sensor
20 Control device
22 Control mode selection unit
24 Voltage control unit
25 Voltage set unit
26 Current control unit
28 Current target value acquisition unit
30 Storage unit
90 Power source
92 Power-transmission line
100 Hydrogen production facility

## Claims

1. A control device for a hydrogen production apparatus including an electrolyzer configured to electrolyze water and a rectifier configured to supply DC power to the electrolyzer, the control device comprising:
a voltage control unit configured to adjust an output voltage output from the rectifier to the electrolyzer in such a manner that the output voltage of the rectifier is coincident with a set voltage; and
a voltage set unit configured to set the set voltage to a first voltage larger than a rated voltage of the electrolyzer in at least a portion of a period during start-up of the hydrogen production apparatus.

2. The control device for a hydrogen production apparatus according to claim 1, wherein
the first voltage is a maximum operating voltage of the electrolyzer.

3. The control device for a hydrogen production apparatus according to claim 1 or 2, further comprising:
a current control unit configured to adjust the output voltage of the rectifier based on a current flowing through a circuit including the electrolyzer; and
a control mode selection unit configured to select a control mode of the rectifier from a voltage control mode in which the rectifier is controlled by the voltage control unit and a current control mode in which the rectifier is controlled by the current control unit, wherein
the control mode selection unit is configured to switch control of the rectifier from the voltage control mode to the current control mode when power in the circuit has reached a limiting value while the rectifier being controlled in the voltage control mode during the start-up of the hydrogen production apparatus, and
the current control unit is configured to adjust the output voltage of the rectifier in such a manner that the current increases within a range in which the power does not exceed the limiting value during the start-up of the hydrogen production apparatus.

4. The control device for a hydrogen production apparatus according to claim 1 or 2, further comprising:
a current control unit configured to adjust the output voltage of the rectifier based on a current flowing through a circuit including the electrolyzer;
a control mode selection unit configured to select a control mode of the rectifier from a voltage control mode in which the rectifier is controlled by the voltage control unit and a current control mode in which the rectifier is controlled by the current control unit; and
a current target value acquisition unit configured to acquire a current target value indicating a current in the circuit corresponding to a target production amount of hydrogen in the electrolyzer, wherein
the control mode selection unit selects the current control mode as the control mode of the rectifier when the start-up of the hydrogen production apparatus is completed, and
the current control unit is configured to adjust the output voltage of the rectifier in such a manner that the current flowing through the circuit approaches the current target value after the start-up of the hydrogen production apparatus is completed.

5. The control device for a hydrogen production apparatus according to claim 4, wherein
the control mode selection unit is configured to determine that the start-up of the hydrogen production apparatus is completed when a temperature of water in the electrolyzer has reached a specified temperature during the start-up of the hydrogen production apparatus.

6. The control device for a hydrogen production apparatus according to claim 4, wherein
the current control unit is configured to adjust the output voltage of the rectifier in such a manner that the current approaches the current target value within a range in which power in the circuit does not exceed a limiting value after the start-up of the hydrogen production apparatus is completed.

7. A hydrogen production facility, comprising:
a hydrogen production apparatus including an electrolyzer configured to electrolyze water and a rectifier configured to supply DC power to the electrolyzer; and
the control device according to claim 1 or 2 configured to control the hydrogen production apparatus.

8. A method for controlling a hydrogen production apparatus including an electrolyzer configured to electrolyze water and a rectifier configured to supply DC power to the electrolyzer, the method comprising:
adjusting an output voltage output from the rectifier to the electrolyzer in such a manner that the output voltage of the rectifier approaches a set voltage; and
setting the set voltage to a first voltage larger than a rated voltage of the electrolyzer in at least a portion of a period during start-up of the hydrogen production apparatus.

9. A control program for a hydrogen production apparatus including an electrolyzer configured to electrolyze water and a rectifier configured to supply DC power to the electrolyzer, the program causing a computer to execute:
a procedure in which an output voltage output from the rectifier to the electrolyzer is adjusted in such a manner that the output voltage of the rectifier approaches a set voltage; and
a procedure in which the set voltage is set to a first voltage larger than a rated voltage of the electrolyzer in at least a portion of a period during start-up of the hydrogen production apparatus.
